# EUROPEAN PATENT APPLICATION

(11) **EP 2 782 237 A1**
(43) Date of publication of application: **24.09.2014**
(21) Application number: 13182718.0
(22) Date of filing: 03.09.2013
(51) Int. Cl.: H02M 3/156, H05B 33/08

(54) **Power-supply circuit and luminaire**

(30) Priority: 22.03.2013 JP 2013061118
(71) Applicant: Toshiba Lighting & Technology Corporation, Yokosuka-shi, Kanagawa 237-8510 (JP)
(72) Inventor: Takahashi, Yuji, Kanagawa, 237-8510 (JP); Kitamura, Noriyuki, Kanagawa, 237-8510 (JP); Otake, Hirokazu, Kanagawa, 237-8510 (JP); Akahoshi, Hiroshi, Kanagawa, 237-8510 (JP)
(74) Representative: Bokinge, Ole

(57) **Abstract**

According to one embodiment, there is provided a power-supply circuit (12) including a substrate (20), a chopper circuit (24), a conductive member (26), first capacitative elements (21), and second capacitative elements (22). The substrate (20) includes a mounting surface (20a). The chopper circuit (24) is provided on the mounting surface (20a), includes input ends (24a, 24b), output ends (24c, 24d), and a switching element (30), and converts a voltage input from the input ends (24a, 24b) and outputs the voltage from the output ends (24c, 24d) according to switching driving of the switching element (30). The conductive member (26) is adjacent to at least a part of the chopper circuit (24). The first capacitative elements (21) are electrically connected between the input ends (24a, 24b) and the conductive member (26) and capacitively couple the input ends (24a, 24b) and the conductive member (26). The second capacitative elements (22) are electrically connected between the output ends (24c, 24d) and the conductive member (26) and capacitively couple the output ends (24c, 24d) and the conductive member (26).

## Description

### FIELD

Embodiments described herein generally relate to a power-supply circuit and a luminaire.

### BACKGROUND

As a power-supply circuit for lighting a illumination light source, for example, there is a switching power supply that generates a predetermined voltage and a predetermined electric current using a switching element. The switching power supply intermittently switches the switching element to ON and OFF to generate a high-frequency current. Therefore, electro magnetic interference (EMI) based on switching noise occurs and noise mixes in an input wire and an output wire. Since a switching frequency is increased according to improvement of efficiency and a reduction in size of the switching power supply, the influence of the EMI is increasing.

### BRIEF DESCRIPTION OF THE DRAWINGS

FIGS. 1A to 1C are schematic diagrams showing a luminaire according to a first embodiment;
FIG. 2 is a circuit diagram schematically showing a first filter unit and a second filter unit according to the first embodiment; and
FIGS. 3A and 3B are schematic diagrams showing a luminaire according to a second embodiment.

### DETAILED DESCRIPTION

In general, according to one embodiment, there is provided a power-supply circuit including a substrate, a chopper circuit, a conductive member, first capacitative elements, and second capacitative elements. The substrate includes a mounting surface. The chopper circuit is provided on the mounting surface, includes input ends, output ends, and a switching element, and converts a voltage input from the input ends and outputs the voltage from the output ends according to switching driving of the switching element. The conductive member is adjacent to at least a part of the chopper circuit. The first capacitative elements are electrically connected between the input ends and the conductive member and capacitively couple the input ends and the conductive member. The second capacitative elements are electrically connected between the output ends and the conductive member and capacitively couple the output ends and the conductive member.

In general, according to another embodiment, there is provided a luminaire including a power-supply circuit and a lighting load. The power-supply circuit includes a substrate, a chopper circuit, a conductive member, first capacitative elements, and second capacitative elements. The substrate includes a mounting surface. The chopper circuit is provided on the mounting surface, includes input ends, output ends, and a switching element, and converts a voltage input from the input ends and outputs the voltage from the output ends according to switching driving of the switching element. The conductive member is adjacent to at least a part of the chopper circuit. The first capacitative elements are electrically connected between the input ends and the conductive member and capacitively couple the input ends and the conductive member. The second capacitative elements are electrically connected between the output ends and the conductive member and capacitively couple the output ends and the conductive member. The lighting load is connected to the output ends of the power-supply circuit.

Embodiments are explained below with reference to the drawings. In this specification and the figures, components same as components already explained with reference to the figures already referred to are denoted by the same reference numerals and signs and detailed explanation of the components is omitted as appropriate.

### First Embodiment

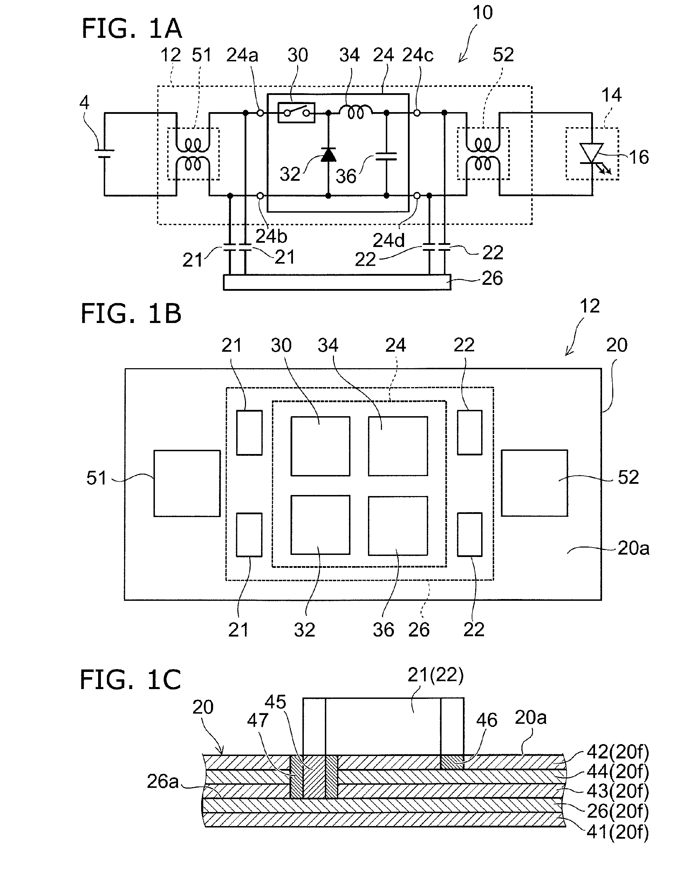

FIGS. 1A to 1C are schematic diagrams showing a luminaire according to a first embodiment.
FIG. 1A is a block diagram schematically showing a luminaire 10. FIG. 1B is a plan view schematically showing a power-supply circuit 12 of the luminaire 10. FIG. 1C is a partial sectional view schematically showing a part of the power-supply circuit 12 of the luminaire 10.

As shown in FIGS. 1A to 1C, the luminaire 10 includes the power-supply circuit 12 and a lighting load 14.

The power-supply circuit 12 is electrically connected to a power supply 4. For example, the power-supply circuit 12 converts a voltage supplied from the power supply 4 into a voltage corresponding to the lighting load 14 and supplies the converted voltage to the lighting load 14. The power supply 4 is, for example, a direct-current power supply. The power supply 4 may be an alternating-current power supply. For example, an alternating-current voltage supplied from the power supply 4 may be converted into a direct-current voltage on the inside of the power-supply circuit 12.

The lighting load 14 is connected to an output end of the power-supply circuit 12. The lighting load 14 includes a illumination light source 16 such as an LED (Light Emitting Diode). The lighting load 14 lights the illumination light source 16 according to power supply from the power-supply circuit 12. The lighting load 14 may include, for example, a plurality of the illumination light sources 16 connected in series or in parallel.

The power-supply circuit 12 includes a substrate 20, first capacitative elements 21, second capacitative elements 22, a chopper circuit 24, and a conductive member 26. The substrate 20 is a so-called printed wiring board. The substrate 20 includes a mounting surface 20a for mounting a plurality of electronic components. In this example, the substrate 20 of a single sided mounting type is shown. However, the substrate 20 may be, for example, a double sided mounting type.

The chopper circuit 24 is provided on the mounting surface 20a. The chopper circuit 24 includes a pair of input ends 24a and 24b, a pair of output ends 24c and 24d, and a switching element 30. The voltage supplied from the power supply 4 is input to the input ends 24a and 24b. For example, a direct-current voltage is input to the input ends 24a and 24b.

The chopper circuit 24 converts the voltage input from the input ends 24a and 24b and outputs the voltage from the output ends 24c and 24d according to switching driving of the switching element 30. For example, the chopper circuit 24 converts a first direct-current voltage input from the input ends 24a and 24b into a second direct-current voltage, which has an absolute value different from an absolute value of the first direct-current voltage, and outputs the second direct-current voltage to the output ends 24c and 24d. The chopper circuit 24 is, for example, a DC-DC converter. In the chopper circuit 24, the frequency of the switching driving of the switching element 30 is, for example, equal to or higher than 100 kHz. The switching frequency is, for example, several hundred kilohertz to several megahertz. More specifically, the switching frequency is 100 kHz to 10 MHz.

As the switching element 30, for example, an FET or a GaN-HEMT is used. The switching element 30 includes, for example, a pair of main electrodes (e.g., a source and a drain) and a control electrode (e.g., a gate) for controlling an electric current flowing between the main electrodes.

The chopper circuit 24 further includes, for example, a diode 32, an inductor 34, and a capacitor 36. The chopper circuit 24 is formed by, for example, a plurality of electronic components.

In this example, one main electrode of the switching element 30 is electrically connected to the input end 24a. The other main electrode of the switching element 30 is electrically connected to a cathode of the diode 32. An anode of the diode 32 is electrically connected to the input end 24b and the output end 24d. One end of the inductor 34 is electrically connected to the other main electrode of the switching element 30 and the cathode of the diode 32. The other end of the inductor 34 is electrically connected to one end of the capacitor 36 and the output end 24c. The other end of the capacitor 36 is electrically connected to the input end 24b and the output end 24d. That is, in this example, the chopper circuit 24 is a falling-voltage chopper circuit. The chopper circuit 24 may be, for example, a rising-voltage chopper circuit.

The conductive member 26 is adjacent to at least a part of the chopper circuit 24. The conductive member 26 is arranged, for example, in a position where the conductive member 26 overlaps at least a part of the chopper circuit 24 when projected on a plane parallel to the mounting surface 20a (viewed in a direction perpendicular to the mounting surface 20a). The conductive member 26 is provided, for example, on the substrate 20. The conductive member 26 is provided on the substrate 20 to overlap, for example, at least a part of the chopper circuit 24. The conductive member 26 overlaps, for example, at least a part of the electronic components included in the chopper circuit 24. The conductive member 26 overlaps, for example, at least a part of a region of the mounting surface 20a where the chopper circuit 24 is provided. The region of the mounting surface 20a where the chopper circuit 24 is provided is, for example, a region to which a high-frequency current involved in the switching driving of the switching element 30 flows. That is, the conductive member 26 overlaps at least a part of the region to which the high-frequency current flows.

The conductive member 26 extends in a direction parallel to the mounting surface 20a. The conductive member 26 is formed in, for example, a layer shape extending in the direction parallel to the mounting surface 20a. A surface 26a of the conductive material 26 is substantially parallel to the mounting surface 20a. The distance between the surface 26a of the conductive member 26 and the mounting surface 20a is substantially fixed. The surface 26a is a surface at a substantially equal distance to the mounting surface 20a. The surface 26a does not always have to be parallel to the mounting surface 20a. The conductive member 26 only has to have a component extending in the direction parallel to the mounting surface 20a.

In this example, the conductive member 26 extends in the direction parallel to the mounting surface 20a and overlaps the entire chopper circuit 24 when projected on the plane parallel to the mounting surface 20a. The conductive member 26 overlaps, for example, each of the electronic components included in the chopper circuit 24. The conductive member 26 overlaps, for example, each of the switching element 30, the diode 32, the inductor 34, and the capacitor 36.

In this example, the substrate 20 includes a plurality of layers 20f superimposed in the direction perpendicular to the mounting surface 20a. That is, the substrate 20 is a multilayer substrate. In this example, the conductive member 26 is provided in the substrate 20 as a part of the plurality of layers 20f of the substrate 20.

The substrate 20 includes, for example, first to third three insulating layers 41 to 43, a wiring layer 44, and the conductive member 26 as the plurality of layers 20f. The third insulating layer 43 is provided between the first insulating layer 41 and the second insulating layer 42. The wiring layer 44 is provided between the second insulating layer 42 and the third insulating layer 43. The wiring layer 44 has conductivity and is used for wiring of the electronic components mounted on the mounting surface 20a. The conductive member 26 is provided between the first insulating layer 41 and the third insulating layer 43. For example, the insulating layers 41 to 43 support the conductive member 26 and the wiring layer 44 and electrically insulate the conductive member 26 and the wiring layer 44. In this example, the substrate 20 having a five layer structure is shown. However, the number of the layers 20f of the substrate 20 may be arbitrary.

The position of the conductive member 26 is not limited to the inside of the substrate 20. For example, when the substrate 20 is the one sided mounting type, the conductive member 26 may be provided on the surface of the substrate 20 on the opposite side of the mounting surface 20a.

The conductive member 26 has conductivity. The electrical conductivity of the conductive member 26 is, for example, equal to or higher than 10⁶ S/m. The conductive member 26 is, for example, a metal layer. A metal material such as Cu, Al, Ag, or Au is used for the conductive member 26. The material of the conductive member 26 is not limited to the metal material and may be an arbitrary material having conductivity. The material of the conductive member 26 may be, for example, carbon graphite.

The power-supply circuit 12 includes two first capacitative elements 21 respectively corresponding to the input ends 24a and 24b of the chopper circuit 24 and two second capacitative elements 22 respectively corresponding to the output ends 24c and 24d of the chopper circuit 24.

One first capacitative element 21 is electrically connected between the input end 24a and the conductive member 26 and capacitively couples the input end 24a and the conductive member 26. The other first capacitative element 21 is electrically connected between the input end 24b and the conductive member 26 and capacitively couples the input end 24b and the conductive member 26.

One second capacitative element 22 is electrically connected between the output end 24c and the conductive member 26 and capacitively couples the output end 24c and the conductive member 26. The other second capacitative element 22 is electrically connected between the output end 24d and the conductive member 26 and capacitively couples the output end 24d and the conductive member 26.

For example, one end of the first capacitative element 21 is electrically connected to the conductive member 26 via a via 45. For example, the other end of the first capacitative element 21 is electrically connected to the wiring layer 44 via a via 46 and electrically connected to the input end 24a or the input end 24b via the wiring layer 44. Consequently, the first capacitative elements 21 are electrically connected to the conductive member 26 and the input ends 24a and 24b. An insulating film 47 is provided between the wiring layer 44 and the via 45. The insulating film 47 electrically insulates the wiring layer 44 and the via 45. A connecting method for the second capacitative elements 22 is substantially the same as the connecting method for the first capacitative elements 21. Therefore, explanation of the connecting method is omitted.

As the capacitative elements 21 and 22, for example, an electrolytic capacitor or a ceramic capacitor is used. The capacity of the capacitative elements 21 and 22 is, for example, several hundred picofarad to several thousand picofarad. The capacity of the capacitative elements 21 and 22 only has to be set as appropriate according to, for example, the size of the substrate 20 and the magnitude of noise.

The power-supply circuit 12 further includes a first filter unit 51 and a second filter unit 52.

The first filter unit 51 is electrically connected to the input ends 24a and 24b of the chopper circuit 24. The first filter unit 51 is provided between the input ends 24a and 24b of the chopper circuit 24 and the power supply 4. The first filter unit 51 attenuates a common mode current flowing out from the input ends 24a to 24b to the power supply 4 side more than a normal mode current flowing out from the input ends 24a and 24b to the power supply 4 side.

The second filter unit 52 is electrically connected to the output ends 24c and 24d of the chopper circuit 24. The second filter unit 52 is provided between the output ends 24c and 24d of the chopper circuit 24 and the lighting load 14. The second filter unit 52 attenuates the common mode current flowing out from the output ends 24c and 24d to the lighting load 14 side more than the normal mode current flowing out from the output ends 24c and 24d to the lighting load 14 side.

The normal mode current is an electric current flowing through, in opposite directions, a pair of input wires respectively connected to a pair of input terminals and is an electric current flowing through, in opposite directions, a pair of output wires respectively connected to a pair of output terminals. The normal mode current transmits a signal or electric power between the pair of input terminals and the pair of output terminals.

The common mode current is an electric current flowing through, in phase, the pair of input wires respectively connected to the pair of input terminals and is an electric current flowing through, in phase, the pair of output wires respectively connected to the pair of output terminals. The common mode current flows between the pair of input wires and the ground and between the pair of output wires and the ground.

The filter units 51 and 52 are, for example, common mode filters. For example, a pair of input ends of the first filter unit 51 is input ends of the power-supply circuit 12. A pair of output ends of the second filter unit 52 is output ends of the power-supply circuit 12. The power supply 4 is electrically connected to the pair of input ends of the first filter unit 51. The lighting load 14 is electrically connected to the pair of output ends of the second filter unit 52. The lighting load 14 is provided such that, for example, a wiring length between the chopper circuit 24 and the second filter unit 52 is smaller than a wiring length between the second filter unit 52 and the lighting load 14.

The filter units 51 and 52 are provided on the mounting surface 20a. The filter units 51 and 52 are arranged in positions on the mounting surface 20a where the filter units 51 and 52 do not overlap the conductive member 26 when projected on the plane parallel to the mounting surface 20a. That is, the conductive member 26 overlaps at least a part of the chopper circuit 24 and does not overlap the filter units 51 and 52 when projected on the plane parallel to the mounting surface 20a.

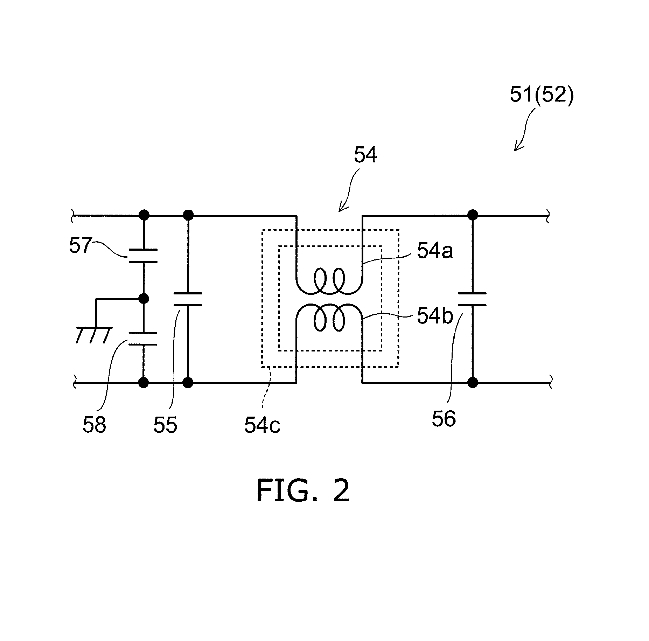

FIG. 2 is a circuit diagram schematically showing the first filter unit and the second filter unit according to the first embodiment.

As shown in FIG. 2, the first filter unit 51 includes a common mode choke coil 54 and capacitors 55 to 58. In the common mode choke coil 54, winding wires are provided such that magnetic fields of the winding wires are generated in opposite directions with respect to the normal mode current and offset each other. Therefore, the common mode choke coil 54 has low impedance with respect to the normal mode current. On the other hand, the magnetic fields of the winding wires are generated in the same direction with respect to the common mode current and added together. Therefore, the common mode choke coil 54 functions as an inductor with respect to the common mode current and has high impedance.

The capacitor 55 is connected between a pair of input terminals of the common mode choke coil 54. The capacitor 56 is connected between a pair of output terminals of the common mode choke coil 54. The capacitors 55 and 56 reduce normal mode noise.

The capacitors 57 and 58 are connected in series between the pair of input terminals of the common mode choke coil 54. A connection point of the capacitors 57 and 58 is grounded. The capacitors 57 and 58 reduce common mode noise.

The second filter unit 52 can be formed substantially the same as the first filter unit 51. The second filter unit 52 only has to include at least the common mode choke coil 54. In the second filter unit 52, the capacitors 55 to 58 can be omitted. Like the capacitors 57 and 58, two capacitors connected in series, a connection point of which is grounded, can be provided in parallel to the capacitor 56. The first filter unit 51 may include a plurality of the common mode coke coils 54. In this way, the filter units 51 and 52 may be substantially the same or may be different in presence or absence of the capacitors 55 to 58, the number of the common mode choke coils 54, and the like.

The common mode choke coil 54 includes, for example, first and second two coil sections 54a and 54b and a core section 54c wound around the coil sections 54a and 54b. The core section 54c includes a magnetic material. The relative permeability of the magnetic material of the core section 54c with respect to an electric current smaller than the normal mode current is higher than the relative permeability of the magnetic material with respect to the normal mode current. For example, the relative permeability of the magnetic material of the core section 54c with respect to the common mode current is higher than the relative permeability of the magnetic material with respect to the normal mode current.

For example, amorphous metal is used as the magnetic material of the core section 54c. As the amorphous metal, for example, an amorphous alloy Fe-Co containing iron (Fe) and cobalt (Co) is used. More specifically, for example, ferrous amorphous metal such as Fe-B, Fe-B-C, Fe-B-Si, Fe-Si-C, Fe-B-Si-Cr, Fe-Co-B-Si, and Fe-Ni-Mo-B and cobalt amorphous metal such as Co-B, Co-Fe-Si-B, Co-Fe-Ni-Mo-B-Si, Co-Fe-Ni-B-Si, Co-Fe-Mn-Ni, Co-Mn-Ni-B-Si, and Co-Fe-Mn-Ni-B are used.

The core section 54c may be, for example, a bulk type molded by sintering a powder material or may be, for example, a laminate type formed by superimposing ribbon-like cores. The core section 54c may include, for example, an outer core that surrounds the coil sections 54a and 54b.

The chopper circuit 24 converts input electric power by, for example, driving to switch the switching element 30 at a high frequency. Therefore, high-frequency switching noise is included in an input current and an output current of the chopper circuit 24.

The normal mode currents flowing between wires on an input side of the chopper circuit 24 flow in opposite directions between the wires each other. Therefore, electromagnetic radiation due to the switching noise is reduced. Similarly, concerning the normal mode currents flowing between wires on an output side of the chopper circuit 24, electromagnetic radiation due to the switching noise is reduced. The electromagnetic radiation due to the switching noise can be further reduced by reducing the distance between the wires.

On the other hand, the common mode current flows between an input wire of the chopper circuit 24 and the ground. The common mode current flows between an output wire of the chopper circuit 24 and the ground.

In a chopper circuit, at least one of an input terminal and an output terminal is often not grounded. In this case, an input wire and an output wire of the chopper circuit is coupled to the ground by, for example, stray capacitance.

Even when at least one of the input terminal and the output terminal of the chopper circuit is grounded, the impedance of the input wire and the output wire increases with respect to high-frequency switching noise. The input wire and the output wire are coupled to the ground by, for example, stray capacitance.

As a result, the common mode current flows between the input wire and the ground on an input side of the chopper circuit. The common mode current flows between the output wire and the ground on an output side of the chopper circuit.

The common mode currents flow in the same direction between the wires each other and flow while forming a large loop between the wires and the ground. Therefore, electromagnetic radiation is not reduced. Therefore, the common mode currents flowing between the input wire and the output wire of the chopper circuit and the ground are small compared with the normal mode currents. However, it is likely that large high-frequency switching noise is radiated.

On the other hand, in the luminaire 10 and the power-supply circuit 12 according to this embodiment, the conductive member 26 is provided and the input ends 24a and 24b and the output ends 24c and 24d of the chopper circuit 24 are respectively connected to the conductive member 26 via the capacitative elements 21 and 22. Consequently, it is possible to fix high-frequency potential of the chopper circuit 24 with respect to the conductive member 26 and form a route through which the common mode current flows. For example, the common mode current flows through a route formed by the chopper circuit 24, the capacitative elements 21 and 22, the conductive member 26, the capacitative elements 21 and 22, and the chopper circuit 24 in this order. Consequently, in the luminaire 10 and the power-supply circuit 12 according to this embodiment, it is possible to reduce the common mode current and suppress occurrence of an electromagnetic interference wave.

In the luminaire 10 and the power-supply circuit 12 according to this embodiment, the first filter unit 51 is connected to the input ends 24a and 24b of the chopper circuit 24 and the second filter unit 52 is connected to the output ends 24c and 24d of the chopper circuit 24. The filter units 51 and 52 attenuate the common mode current more than the normal mode current. The filter units 51 and 52 increase, for example, common mode impedance. Therefore, by providing the filter units 51 and 52, it is possible to further suppress occurrence of an electromagnetic interference wave.

When the filter units 51 and 52 are provided, the filter units 51 and 52 are prevented from overlapping the conductive member 26. Consequently, for example, it is possible to suppress capacitive coupling of the filter units 51 and 52 and the conductive member 26. For example, it is possible to suppress the common mode current flowing through the conductive member 26 from leaking to the outside via the filter units 51 and 52.

In the luminaire 10 and the power-supply circuit 12 according to this embodiment, as the magnetic material of the core section 54c of the common mode choke coil 54, the material, the relative permeability of which with respect to the normal mode current is higher than the relative permeability thereof with respect to the common mode current, is used. Consequently, it is possible to further suppress common mode noise. For example, amorphous metal is used as the magnetic material of the core section 54c. Consequently, for example, even in a high-frequency range exceeding megahertz, it is possible to obtain high common mode impedance. It is possible to more appropriately suppress common mode noise. It is possible to more appropriately suppress occurrence of an electromagnet interference wave.

A larger overlapping amount of the chopper circuit 24 and the conductive member 26 is better. That is, it is preferable to provide the conductive member 26 overlapping the entire chopper circuit 24. Consequently, for example, it is possible to more appropriately feed the common mode current to the conductive member 26.

### Second Embodiment

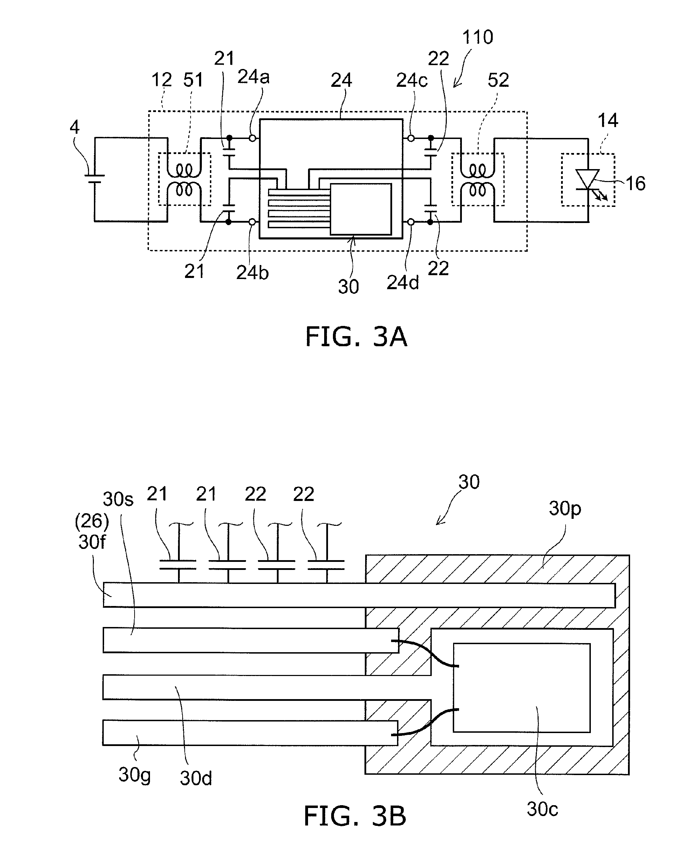

FIGS. 3A and 3B are schematic diagrams showing a luminaire according to a second embodiment.

FIG. 3A is a block diagram schematically showing a luminaire 110. FIG. 3B is a block diagram schematically showing the switching element 30.

As shown in FIGS. 3A and 3B, in the luminaire 110, the switching element 30 includes a plurality of lead frames 30d, 30f, 30g, and 30s. In this example, the switching element 30 includes four lead frames 30d, 30f, 30g, and 30s. The number of lead frames is not limited to four and may be, for example, five or more.

In the luminaire 110, one first capacitative element 21 is electrically connected between the input end 24a and the lead frame 30f and capacitively couples the input end 24a and the lead frame 30f. The other first capacitative element 21 is electrically connected between the input end 24b and the lead frame 30f and capacitively couples the input end 24b and the lead frame 30f.

In the luminaire 110, one second capacitative element 22 is electrically connected between the output end 24c and the lead frame 30f and capacitively couples the output end 24c and the lead frame 30f. The other second capacitative element 22 is electrically connected between the output end 24d and the lead frame 30f and capacitively couples the output end 24d and the lead frame 30f.

That is, in this example, the lead frame 30f, which is one of the plurality of lead frames 30d, 30f, 30g, and 30s, is used as the conductive member 26. In this example, as in the first embodiment, the conductive member 26 (the lead frame 30f) overlaps at least a part of the chopper circuit 24 and does not overlap each of the filter units 51 and 52 when projected on the plane parallel to the mounting surface 20a. That is, in this example, as in the first embodiment, the conductive member 26 is adjacent to at least a part of the chopper circuit 24.

As shown in FIG. 3B, the lead frames 30d, 30f, 30g, and 30s extend to the inside of sealing resin 30p. In FIG. 3B, a state in which a part of the sealing resin 30p is removed is shown.

A semiconductor chip 30c is placed in a portion of the inside of the sealing resin 30p of the lead frame 30d. The lead frame 30d is electrically connected to the semiconductor chip 30c. The lead frame 30g is electrically connected to the semiconductor chip 30c via a bonding wire or the like, for example, in the sealing resin 30p. The lead frame 30s is electrically connected to the semiconductor chip 30c via a bonding wire or the like, for example, in the sealing resin 30p.

The lead frame 30d functions as, for example, a first main electrode. The lead frame 30s functions as, for example, a second main electrode. The lead frame 30g functions as, for example, a control electrode for controlling an electric current flowing between the first main electrode and the second main electrode. The lead frame 30d is, for example, a drain electrode. The lead frame 30s is, for example, a source electrode. The lead frame 30g is, for example, a gate electrode.

The lead frame 30f functioning as the conductive member 26 is electrically insulated to each of the other lead frames 30d, 30g, and 30s. The lead frame 30f is, for example, electrically insulated from each of the drain electrode, the source electrode, and the gate electrode. Examples of the switching element 30 including the lead frame electrically insulated from each of the first main electrode, the second main electrode, and the control electrode in this way include 2SK3544 (Toshiba).

In this way, the lead frame 30f of the switching element 30 may be used as the conductive member 26. In this case, for example, it is possible to further reduce the length of a route through which the common mode current flows. Further, it is possible to more appropriately suppress occurrence of an electromagnetic interference wave.

The lead frame 30f functioning as the conductive member 26 may be electrically connected to, for example, any one of the other lead frames 30d, 30g, and 30s. However, by electrically insulating the lead frame 30f from each of the other lead frames 30d, 30g, and 30s, for example, it is possible to suppress a leak of the common mode current. For example, it is possible to more appropriately suppress occurrence of an electromagnetic interference wave.

The illumination light source 16 is not limited to the LED and may be, for example, an organic EL (Electro-Luminescence) or an OLED (Organic light-emitting diode). A plurality of the illumination light sources 16 may be connected to the lighting load 14 in series or in parallel. The power-supply circuit 12 is not limited to be connected to the lighting load 14 and may be connected to other loads.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power-supply circuit (12) comprising:
a substrate (20) including a mounting surface (20a);
a chopper circuit (24) provided on the mounting surface (20a), including input ends (24a, 24b), output ends (24c, 24d), and a switching element (30), and configured to convert a voltage input from the input ends (24a, 24b) and output the voltage from the output ends (24c, 24d) according to switching driving of the switching element (30);
a conductive member (26) adjacent to at least a part of the chopper circuit (24);
first capacitative elements (21) electrically connected between the input ends (24a, 24b) and the conductive member (26) and configured to capacitively couple the input ends (24a, 24b) and the conductive member (26); and
second capacitative elements (22) electrically connected between the output ends (24c, 24d) and the conductive member (26) and configured to capacitively couple the output ends (24c, 24d) and the conductive member (26).

2. The circuit (12) according to claim 1, further comprising:
a first filter unit (51) electrically connected to the input ends (24a, 24b) and configured to attenuate a common mode current flowing to the input ends (24a, 24b) more than a normal mode current flowing to the input ends (24a, 24b); and
a second filter unit (52) electrically connected to the output ends (24c, 24d) and configured to attenuate the common mode current flowing to the output ends (24c, 24d) more than the normal mode current flowing to the output ends (24c, 24d), wherein
the conductive member (26) does not overlap each of the first filter unit (51) and the second filter unit (52) when projected on a plane parallel to the mounting surface (20a).

3. The circuit (12) according to claim 1 or 2, wherein
the substrate (20) includes a plurality of layers (20f) superimposed in a direction perpendicular to the mounting surface (20a), and
the conductive member (26) is provided in the substrate (20) as a part of the plurality of layers (20f).

4. The circuit (12) according to claim 1 or 2, wherein
the switching element (30) includes a plurality of lead frames (30d, 30f, 30g, 30s), and
the conductive member (26) is one of the plurality of lead frames (30d, 30f, 30g, 30s).

5. The circuit (12) according to any one of claims 2 to 4, wherein
each of the first filter unit (51) and the second filter unit (52) includes a common mode choke coil (54),
the common mode choke coil (54) includes a core section (54c) including a magnetic material, and
relative permeability of the magnetic material with respect to an electric current smaller than the normal mode current is higher than relative permeability of the magnetic material with respect to the normal mode current.

6. The circuit (12) according to claim 5, wherein the magnetic material includes amorphous metal.

7. A luminaire (10, 110) comprising:
the power-supply circuit (12) according to any one of claims 1 to 6; and
a lighting load (14) connected to the power-supply circuit (12).
